# EUROPÄISCHE PATENTSCHRIFT

(11) **EP 2 608 364 B1**
(45) Veröffentlichungstag und Bekanntmachung des Hinweises auf die Patenterteilung: **09.05.2018**
(21) Anmeldenummer: 12154522.2
(22) Anmeldetag: 08.02.2012
(51) Int. Cl.: H02K 5/22, H02K 11/33, F04D 13/06

(54) **Elektrischer Antriebsmotor**
Electrical drive motor
Moteur d'entraînement électrique

(30) Priorität: 23.12.2011 EP 11195636; 23.12.2011 EP 11195639; 23.12.2011 EP 11195640
(43) Veröffentlichungstag der Anmeldung: 26.06.2013
(73) Patentinhaber: Grundfos Holding A/S, 8850 Bjerringbro (DK)
(72) Erfinder: Sofussen, Morten, 8000 Aarhus C (DK)
(74) Vertreter: Patentanwälte Vollmann & Hemmer

(56) Entgegenhaltungen:
- EP-A1- 1 582 751
- DE-A1- 19 851 060
- FR-A1- 2 841 525
- US-A1- 2008 304 988
- US-A1- 2009 021 091
- US-A1- 2009 237 905

## Beschreibung

Die Erfindung betrifft einen elektrischen Antriebsmotor, insbesondere für ein Pumpenaggregat mit den im Oberbegriff des Anspruchs 1 angegebenen Merkmalen.

Es sind elektrische Antriebsmotoren für Pumpenaggregate bekannt, welche einen Klemmenkasten bzw. Elektronikgehäuse aufweisen, in welchem elektrische und elektronische Komponenten zur Steuerung bzw. Regelung des Antriebsmotors angeordnet sind. Ein solcher Klemmenkasten kann an verschiedenen Stellen des Antriebsmotors angeordnet sein. So ist es bekannt, den Klemmenkasten radialseitig des Antriebsmotors am Außenumfang oder axialseitig am axialen Ende des Antriebsmotors anzuordnen. Auch ist es bekannt, Klemmenkästen auszubilden, welche am axialen Ende angeordnet sind und im Wesentlichen dieselbe Außenform bzw. Umfangskontur wie das Axialende des Antriebsmotors aufweisen. Diese Klemmenkästen bilden somit eine axiale Verlängerung des Motor- bzw. Statorgehäuses des Antriebsmotors. Darüber hinaus ist es bekannt, solche Klemmenkästen zusätzlich mit einem zweiten Abschnitt zu versehen, welcher radial zu dem axialen Abschnitt angeordnet ist und somit über die Außenkontur des Antriebsmotors bzw. dessen Statorgehäuses nach außen auskragen. Dieser zweite Abschnitt ist dann bogenförmig ausgebildet und liegt direkt am Außenumfang des Statorgehäuses an.

Problematisch ist, dass diese Klemmenkästen gegebenenfalls nicht den erforderlichen Bauraum für die elektronischen Bauteile aufweisen und darüber hinaus keine ausreichende Kühlung für die elektronischen Bauteile im Inneren des Klemmenkastens bieten.

FR 2 841 525 A1 offenbart eine elektrische Hydraulikpumpe, wobei axialseitig an den Elektromotor ein Elektronikgehäuse angesetzt ist, welches in seiner Grundform aus einem rechteckigen Abschnitt und einem kreissegmentförmigen Teilabschnitt gebildet wird, welcher kleiner als ein Halbkreis ist. Der rechteckige Abschnitt erstreckt sich somit in Durchmesserrichtung des Elektromotors über mehr als den halben Durchmesser, sodass er seitlich relativ weit über den Außenumfang des Elektromotors auskragt. Dies führt in diesem Bereich zu einer relativ großen Bauform des Aggregates.

US 2009/0237905 A1 offenbart ein Elektronikgehäuse für einen elektrischen Antriebsmotor, welches sich radialseitig an einen Aufnahmeraum für den Antriebsmotor anschließt. Dies führt zu einer relativ großen Ausdehnung in radialer Richtung.

US 2009/0021091 A1 offenbart einen Elektromotor mit einem sich ebenfalls radial zu einem Aufnahmeraum für den Elektromotor anschließenden Elektronikgehäuse. Auch dieser Motor weist somit eine relativ große Ausdehnung in radialer Richtung auf.

EP 1 582 751 A1 offenbart ein Pumpenaggregat mit einem an einem elektrischen Antriebsmotor angeordneten Elektronikgehäuse, welches einen radialseitig angeordneten und einen axialseitig an das Motorgehäuse angeordneten Abschnitt aufweist. Dabei erstreckt sich der radialseitig angeordnete Abschnitt bogenförmig im Wesentlichen um den halben Außenumfang des Motorgehäuses. Diese Anordnung ist nachteilig im Hinblick auf die Wärmeabfuhr von dem Motorgehäuse.

Im Hinblick auf diese Problematik ist es Aufgabe der Erfindung, einen verbesserten elektrischen Antriebsmotor bereitzustellen, welcher ein Elektronikgehäuse bzw. einen Klemmenkasten aufweist, welcher einen ausreichenden Raum für elektronische Bauteile bietet und darüber hinaus eine verbesserte Kühlung der elektronischen Bauteile ermöglicht.

Diese Aufgabe wird durch einen elektrischen Antriebsmotor mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

An dem elektrischen Antriebsmotor gemäß der Erfindung ist ein Klemmenkasten bzw. ein Elektronikgehäuse angeordnet, in welchem elektrische und/oder elektronische Bauelemente zur Steuerung des elektrischen Antriebsmotors angeordnet sind. Der Klemmenkasten ist in seiner geometrischen Grundform aus mehreren Abschnitten gebildet, welche gemeinsam die Gesamtgestalt bzw. Gesamtform des Klemmenkastens bilden. Dabei ist zu verstehen, dass die einzelnen Abschnitte keine Einzelteile im eigentlichen Sinne bilden, sondern geometrische Grundelemente, aus welchen sich die Gesamtform des Klemmenkastens ergibt.

Ein erster Abschnitt des Klemmenkastens ist an einem Axialende des Antriebsmotors angeordnet. Dies ist vorzugsweise ein der Antriebsseite abgewandtes Axialende, in Richtung der Längs- bzw. Drehachse gesehen.

Dieser erste Abschnitt des Klemmenkastens hat gemäß einer bevorzugten Ausführungsform im Wesentlichen dieselbe Umfangskontur wie das Axialende des Antriebsmotors, d. h. er bildet eine axiale Verlängerung des Antriebsmotors, d. h. dessen Motor- bzw. Statorgehäuses. Die äußere Form und Dimension des ersten Abschnitts entspricht dabei der äußeren Form und Dimension des Antriebsmotors bzw. dessen Statorgehäuses an dem genannten ersten Axialende. Im Falle eines zylindrischen Statorgehäuses weist der erste Abschnitt des Klemmenkastens vorzugsweise ebenfalls eine zylindrische Grundform mit im Wesentlichen demselben Durchmesser wie das Statorgehäuse auf. Alternativ kann der erste Abschnitt eine Umfangskontur aufweisen, welche eine zu der Umfangskontur des Axialendes parallele größere Umfangskontur ist. D. h. der Außenumfang des ersten Abschnittes ist um ein konstantes Maß vom Außenumfang des Antriebsmotors an dessen Axialende beabstandet. Beispielsweise kann der erste Abschnitt eine kreisförmige Umfangskontur haben, welche einen größeren Durchmesser als ein kreisförmiges Axialende des Antriebsmotors aufweist, wobei sowohl die Umfangskontur des Axialendes des Antriebsmotors als auch die Umfangskontur des ersten Abschnittes sich konzentrisch zur Längs- bzw. Drehachse des Antriebsmotors erstrecken.

Erfindungsgemäß weist der Klemmenkasten darüber hinaus einen zweiten Abschnitt auf, welcher bezogen auf die Längs- bzw. Drehachse des Antriebsmotors radial beabstandet zu dem ersten Abschnitt angeordnet ist. D. h. der zweite Abschnitt grenzt nicht direkt an den ersten Abschnitt an. Der erste Abschnitt und der zweite Abschnitt des Klemmenkastens sind über einen Verbindungsabschnitt verbunden. Der Verbindungsabschnitt bildet dabei ebenfalls einen Teil des Klemmenkastens, stellt die Verbindung zwischen dem ersten und zweiten Abschnitt her und hält den zweiten Abschnitt über den ersten Abschnitt an dem Antriebsmotor.

Der zweite Abschnitt des Klemmenkastens weist in tangentialer Richtung bezogen auf die Längs- bzw. Drehachse des Antriebsmotors eine Breite auf, welche größer ist als der zu dieser Richtung parallele Durchmesser des ersten Abschnittes. D. h. der zweite Abschnitt erstreckt sich auch in tangentialer Richtung über die Außenseiten des ersten Abschnittes hinaus. Der Verbindungsabschnitt weist zwei einander abgewandte, sich von dem zweiten Abschnitt zu dem ersten Abschnitt erstreckende Seitenwandungen auf. Diese Seitenwandungen begrenzen den Verbindungsabschnitt in tangentialer Richtung und erstrecken sich gewinkelt zueinander, so dass sie sich zu dem ersten Abschnitt hin einander annähern. Die Seitenwandungen gehen dann bevorzugt in die Seitenwandungen bzw. Seitenwandung des ersten Abschnittes über bzw. schließen sich an diese an. Der Verbindungsabschnitt ist dabei so ausgebildet, dass die Seitenwandungen des Verbindungsabschnittes, welche zu dem ersten Abschnitt hin führen, sich ausgehend von tangential äußeren Seitenflächen des zweiten Abschnittes erstrecken. D. h. der Verbindungsabschnitt hat somit in axialer Draufsicht eine im Wesentlichen trapezförmige Grundform.

Der erste Abschnitt, der zweite Abschnitt und der Verbindungsabschnitt sind vorzugsweise axialseitig zu dem Antriebsmotor gelegen und definieren weiter bevorzugt einen gemeinsamen Innenraum. D. h. der erste Abschnitt und der zweite Abschnitt sowie der Verbindungsabschnitt sind zueinander geöffnet, so dass sie gemeinsam den Innenraum des Klemmenkastens umschließen, in welchem elektrische und/oder elektronische Bauteile angeordnet sind. Dabei ist, wie oben bereits dargelegt, zu verstehen, dass er erste Abschnitt, der zweite Abschnitt und der Verbindungsabschnitt nicht als Einzelteile ausgebildet sein müssen, sondern vielmehr geometrische Grundelemente definieren, aus welchen sich die geometrische Grundform des Klemmenkastens gebildet ist. Der erste Abschnitt, der zweite Abschnitt und/oder der Verbindungsabschnitt können dabei auch fest miteinander verbunden sein oder einstückig bzw. integral ausgebildet sein. Durch die bevorzugte axiale Lage aller drei Abschnitte wird erreicht, dass keiner der Abschnitte, insbesondere auch nicht der zweite Abschnitt im Umfangsbereich des Statorgehäuses des Antriebsmotors gelegen ist, so dass hier ein maximaler Abstand geschaffen wird, welcher zu einer besseren Kühlung sämtlicher im Klemmkasten angeordneten Komponenten dienen kann. Der erste Abschnitt und der zweite Abschnitt sowie der zwischenliegende Verbindungsabschnitt definieren dabei einen großen Innenraum, so dass ausreichend Raum für die Anordnung elektronischer Bauelemente gegeben ist.

Der erste Abschnitt weist vorzugsweise eine zylindrische, insbesondere ein kreiszylindrische Grundform auf. Darunter ist auch eine konische Form zu verstehen. Vorzugsweise ist die Form so gewählt, dass ein harmonischer Übergang zwischen dem Axialende des Antriebsmotors und dem ersten Abschnitt des Klemmenkastens gegeben ist, so dass der erste Abschnitt des Klemmenkastens eine axiale Verlängerung des Antriebsmotors bzw. des Statorgehäuses des Antriebsmotors bildet. D. h. der Durchmesser des zylindrischen Abschnittes entspricht vorzugsweise dem Durchmesser eines im Querschnitt runden Statorgehäuses an dessen Axialende.

Der zweite Abschnitt hat vorzugsweise eine prismatisch, insbesondere eine quaderförmige Grundform. Dabei hat der zweite Abschnitt bevorzugt eine axiale Höhe, d. h. in Richtung der Längs- bzw. Drehachse des Pumpenaggregates, welche der Höhe des ersten Abschnittes und vorzugsweise auch des Verbindungsabschnittes entspricht. So hat der gesamte Klemmenkasten, gebildet aus erstem Abschnitt, zweitem Abschnitt und Verbindungsabschnitt, vorzugsweise eine scheibenförmige Gestalt, von konstanter axialer Dicke bzw. Höhe. Die prismatische oder quaderförmige Grundform des zweiten Abschnittes schließt auch eine solche Form ein, welche gerundete Ecken oder Kanten aufweist, aber die geometrische Grundform eines Prismas oder Quaders noch erkennen lässt.

Der Verbindungsabschnitt weist bevorzugt eine Grundform mit zwei einander abgewandten Seitenwandungen auf, welche sich jeweils ausgehend von einer Seitenkante des zweiten Abschnittes tangential angrenzend an den ersten Abschnitt erstrecken. Die Seitenkanten, von denen ausgehend sich die Seitenwandungen des Verbindungsabschnittes erstrecken sind vorzugsweise sich parallel zur Drehachse des Antriebsmotors, d. h. in axialer Richtung erstreckende Seitenkanten. Die Seitenwandungen erstrecken sich zu dem ersten Abschnitt bevorzugt in der Weise tangential, dass sie in die Grundform des ersten Abschnittes auslaufen. Es ist zu verstehen, dass die Grundform des ersten Abschnittes in dem Bereich, wo diese an den Verbindungsabschnitt angrenzt, dann nach außen an der Seite des Verbindungsabschnittes als solche nicht mehr erkennbar ist. D. h. die geometrischen Grundformen von erstem Abschnitt, zweitem Abschnitt und Verbindungsabschnitt können ineinander greifen, um so insgesamt die geometrische Grundgestalt des gesamten Klemmenkastens zu bilden.

Ein so gebildeter Klemmenkasten wird in der Draufsicht gesehen somit bevorzugt aus drei geometrischen Grundelementen, einem Viereck, insbesondere Rechteck, einem Trapez und einem Kreis gebildet, wobei diese Grundelemente, insbesondere das Trapez und der Kreis ineinander greifen können, so dass die sich einander annähernden Seitenkanten des Trapezes tangential in den Umfang des Kreises übergehen.

In einer besonderen Ausführungsform der Erfindung kann der Klemmenkasten einen dritten Abschnitt aufweisen, welcher eine axiale Verlängerung des zweiten Abschnittes ist und radial beabstandet zu dem Antriebsmotor im Umfangsbereich des Antriebsmotors gelegen ist. Dadurch wird ein noch größerer Innenraum des Klemmenkastens geschaffen. Es ist zu verstehen, dass dieser dritte Abschnitt bevorzugt zu dem zweiten Abschnitt hin geöffnet ist, bevorzugt auch mit dem zweiten Abschnitt integral bzw. einstückig ausgebildet sein kann. Der dritte Abschnitt bildet dabei besonders bevorzugt mit dem zweiten Abschnitt eine gemeinsame prismatische oder quaderförmige Form. Dabei weist diese quaderförmige bzw. prismatische Grundform einen Querschnitt quer zur Axial- bzw. Drehrichtung des Antriebsmotors auf, welche über die gesamte axiale Länge des dritten Abschnittes und bevorzugt auch des zweiten Abschnittes konstant ist. Der aus dem ersten, zweiten Abschnitt, Verbindungsabschnitt und dritten Abschnitt gebildete Klemmenkasten weist somit in der Seitenansicht gesehen eine gewinkelte Form auf, wobei sich der erste Abschnitt, der zweite Abschnitt und der Verbindungsabschnitt wie vorangehend beschrieben axialseitig des Antriebsmotors bzw. Statorgehäuses des Antriebsmotors erstrecken, während sich der dritte Abschnitt gewinkelt, vorzugsweise um 90° gewinkelt zu dem aus erstem Abschnitt, zweitem Abschnitt und Verbindungsabschnitt gebildeten scheibenförmigen Element parallel zur Längs- bzw. Drehachse des Antriebsmotors radial beabstandet zu dem Antriebsmotor erstreckt.

Zwischen dem Außenumfang des Antriebsmotors bzw. dem Außenumfang des Statorgehäuses und dem dritten Abschnitt des Klemmenkastens ist weiter bevorzugt ein Freiraum vorhanden. Dieser ermöglicht eine Kühlluftzirkulation zwischen dem Außenumfang des Antriebsmotors und dem dritten Abschnitt des Klemmenkastens. Bevorzugt erstreckt sich dieser Freiraum in zumindest einer vorgegebenen Einbaulage des Antriebsmotors in vertikaler Richtung. Dies ermöglicht es, dass erwärmte Luft ungehindert durch diesen Freiraum nach oben aufsteigen und somit abströmen kann.

Gemäß einer bevorzugten Ausführungsform kann zwischen dem Außenumfang des Antriebsmotors und dem dritten Abschnitt des Klemmenkastens ein Freiraum vorhanden sein, in welchem an dem Antriebsmotor oder an dem Klemmenkasten angeordnete Kühlelemente, beispielsweise Kühlrippen gelegen sind. So kann in diesem Bereich eine optimierte Wärmeabfuhr vom Klemmenkasten und/oder vom Antriebsmotor in die Umgebung erreicht werden. Der Freiraum wird dadurch erzeugt, dass der Verbindungsabschnitt den zweiten Abschnitt und damit den dritten Abschnitt radial beabstandet zum Außenumfang des Antriebsmotors hält.

Der Klemmenkasten kann zusätzlich einen vierten Abschnitt aufweisen, welcher radial an den ersten Abschnitt an dessen dem zweiten Abschnitt abgewandter Seite angrenzt. Dies ist vorzugsweise die diametral entgegengesetzte Seite zu dem zweiten Abschnitt und dem Verbindungsabschnitt. Der vierte Abschnitt kann dabei eine radiale Verlängerung des Verbindungsabschnittes bilden, d. h. bei dieser Ausgestaltung erstreckt sich der Verbindungsabschnitt an der Axialseite über das Axialende des Antriebsmotors hinweg und geht in den vierten Abschnitt über. So ist der erste Abschnitt vollständig in den Verbindungsabschnitt aufgenommen und muss nicht zwingend als separater Abschnitt äußerlich in Erscheinung treten. Die durchgehenden Seitenwandungen des Verbindungsabschnittes gehen dabei in die Seitenwandungen des vierten Abschnittes über und grenzen bevorzugt tangential an den, möglicherweise nur gedachten, ersten Abschnitt an. Der Verbindungsabschnitt und der vierte Abschnitt können so gemeinsam eine Grundform bilden, welche im Querschnitt im Wesentlichen trapezförmig oder dreieckig ist.

Bevorzugt sind zumindest zwei, vorzugsweise alle Abschnitte des Klemmenkastens einstückig ausgebildet. Dabei sind einzelne Abschnitte, vorzugsweise alle Abschnitte aus Kunststoff, insbesondere als Spritzgussteile gefertigt.

Die aneinander angrenzenden Wandungen der einzelnen Abschnitte des Klemmenkastens, d. h. des ersten Abschnittes, des zweiten Abschnittes und des Verbindungsabschnittes sowie gegebenenfalls des dritten Abschnittes sind weiter bevorzugt so ausgebildet, dass sie fließend ineinander übergehen. D. h. an den Übergangsbereichen können Rundungen bzw. fließende Übergänge ausgebildet sein. Auch die Wandungen der Abschnitte selber können von den beschriebenen geometrischen Grundformen durch Krümmungen bzw. Formanpassungen abweichen, so dass insgesamt ein Klemmenkasten von integraler Form geschaffen wird. Dennoch bilden die geschriebenen Abschnitte die geometrischen Grundelemente, aus denen sich die geometrische Grundform des gesamten Klemmenkastens bildet.

Der erste Abschnitt, der zweite Abschnitt und der Verbindungsabschnitt sind ferner zweckmäßigerweise an ihrer dem Antriebsmotor abgewandten axialen Stirnseite durch einen gemeinsamen Deckel verschlossen. Dieser Deckel ermöglicht einen großen Zugang zu dem gesamten Innenraum des Klemmenkastens, so dass sich die im Inneren des Klemmenkastens anzuordnenden elektrischen bzw. elektronischen Bauteile gut montieren lassen. Der Deckel kann weiter bevorzugt mit Bedien- und/oder Anzeigeelementen versehen sein. Diese sind an der Axialseite des Antriebsmotors von außen gut zugänglich.

Der erfindungsgemäße Antriebsmotor gemäß der vorangehenden Beschreibung ist bevorzugt Bestandteil eines Pumpenaggregates. Bei einem solchen Pumpenaggregat handelt es sich vorzugsweise um ein Umwälzpumpenaggregat, insbesondere ein Heizungsumwälzpumpenaggregat. Ferner ist der Antriebsmotor in einem solchen Pumpenaggregat bevorzugt als nasslaufender Motor, d. h. als Spaltrohrmotor ausgebildet. Gegenstand der Erfindung ist darüber hinaus ein solches Pumpenaggregat.

Nachfolgend wird die Erfindung beispielhaft anhand eines Pumpenaggregates gemäß der beigefügten Figuren beschrieben. In diesen zeigt:
- Fig. 1: eine schematische Seitenansicht eines Pumpenaggregates gemäß einer ersten Ausführungsform der Erfindung,
- Fig. 2: eine axiale Draufsicht auf das Pumpenaggregat gemäß Fig. 1,
- Fig. 3: eine axiale Draufsicht allein auf den Klemmenkasten gemäß Figuren 1 und 2,
- Fig. 4: eine schematische Seitenansicht eines Pumpenaggregates gemäß einer zweiten Ausführungsform und
- Fig. 5: eine Draufsicht allein auf den Klemmenkasten gemäß den weiteren Ausführungsformen der Erfindung.

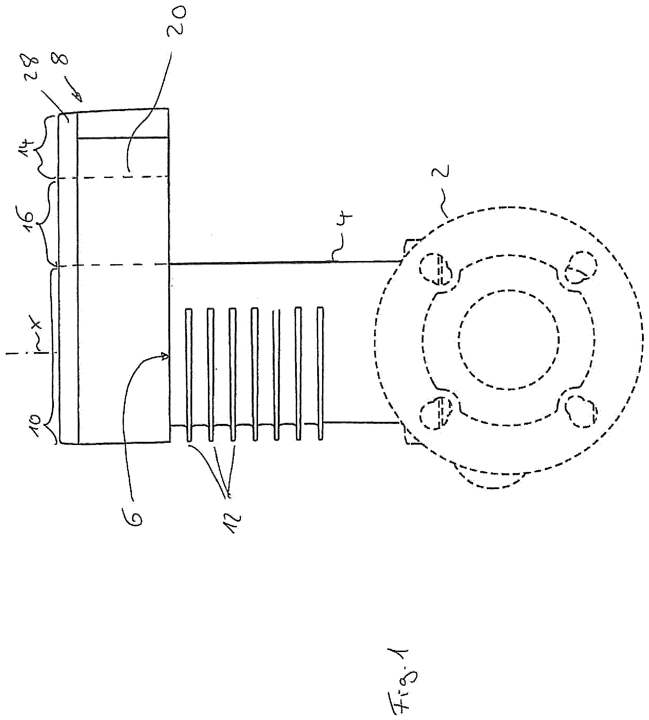

Das in Fig. 1 schematisch gezeigte Pumpenaggregat weist ein Pumpengehäuse 2 auf, an welches sich in axialer Richtung X, d. h. in Richtung der Längs- bzw. Drehachse im Inneren des Pumpengehäuses 2 ein Motorgehäuse bzw. Statorgehäuse 4 anschließt, welches Stator und Rotor als elektrischen Antriebsmotor beinhaltet. Das Statorgehäuse 4 bildet somit die Außenwandung des elektrischen Antriebsmotors. Axialseitig an diesen elektrischen Antriebsmotor bzw. das Statorgehäuse 4 ist an dem dem Pumpengehäuse 2 abgewandten Axialende 6 ein Klemmenkasten 8 angebracht. Der Klemmenkasten 8 bildet ein Elektronikgehäuse, in dem elektrische bzw. elektronische Bauteile zum Anschluss sowie zur Steuerung und/oder Regelung des Pumpenaggregates bzw. des elektrischen Antriebsmotors angeordnet sind.

Erfindungsgemäß weist der Klemmenkasten 8 eine spezielle Formgebung auf, welche sich aus mehreren geometrischen Grundkörpern zusammengesetzt. So weist der Klemmenkasten 8 einen ersten Abschnitt 10 auf, welcher axialseitig des Statorgehäuses 4 gelegen ist und dessen Außenkontur die Form des Statorgehäuses 4 an dessen Axialende 6 aufweist, d. h. in diesem Fall kreiszylindrisch ausgebildet ist. Der erste Abschnitt 10 bildet somit eine axiale Verlängerung des Statorgehäuses 4. Die Außenkontur des Statorgehäuses 4 wird in diesem Fall durch den Außenumfang der sich umfangsseitig des Statorgehäuses 4 erstreckenden Kühlrippen 12 definiert. Der erste Abschnitt 10 weist somit von seiner geometrischen Grundform her eine kreiszylindrische Form auf, welche in den Draufsichten gestrichelt dargestellt ist.

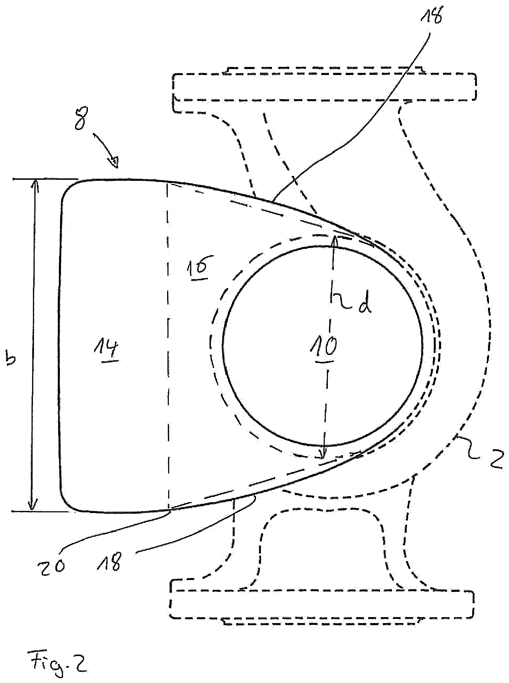

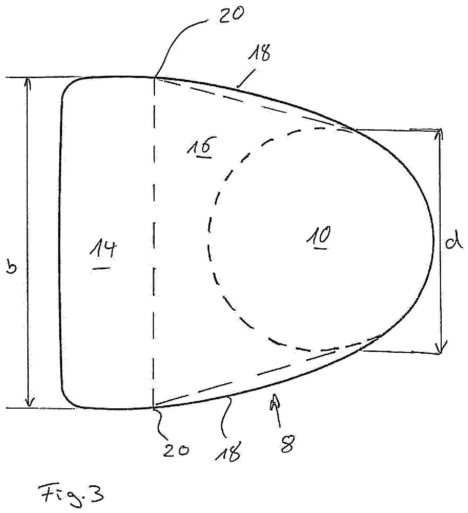

Radial beabstandet weist der Klemmenkasten 8 einen zweiten Abschnitt 14 auf, welcher in den Figuren 2 und 3 an seiner dem ersten Abschnitt 10 zugewandten Seite durch die gezeigte gestrichelte Linie begrenzt ist. Der erste Abschnitt 10 und der zweite Abschnitt 14 weisen dieselbe axiale Höhe in Richtung der Längsachse X auf. Verbunden sind die Abschnitte 10 und 14 über einen Verbindungsabschnitt 16, welcher ebenfalls dieselbe axiale Höhe aufweist, so dass insgesamt ein scheibenförmiger Klemmenkasten von dem ersten Abschnitt 10, dem zweiten Abschnitt 14 und dem Verbindungsabschnitt 16 gebildet wird.

Ferner weist der Klemmenkasten einen zweiten Abschnitt auf, welcher radial beabstandet zu dem ersten Abschnitt des Klemmenkastens angeordnet ist. D. h. dieser zweite Abschnitt liegt radial außerhalb der Projektion des Antriebsmotors bzw. des Statorgehäuses des Antriebsmotors. Der Klemmenkasten erstreckt sich somit in radialer Richtung über den Außendurchmesser bzw. Außenumfang des Antriebsmotors zumindest mit diesem zweiten Abschnitt hinaus. Der zweite Abschnitt des Klemmenkastens ist dabei radial beabstandet zu dem ersten Abschnitt des Klemmenkastens gelegen. D. h. der zweite Abschnitt grenzt nicht direkt an den Außenumfang des Antriebsmotors bzw. dessen Statorgehäuses oder an eine axiale Projektion des Außenumfanges des Antriebsmotors an, sondern ist radial weiter außenliegend gelegen. Dadurch wird erreicht, dass dieser Bereich des Klemmenkastens von dem Antriebsmotor weiter beabstandet ist. So kann eine bessere Kühlung der in diesem Bereich im Inneren angeordneten Bauelemente erreicht werden.

Der Verbindungsabschnitt 16 hat wie durch die gestrichelten Linien in Figuren 2 und 3 in der Draufsicht angedeutet eine trapezförmige Grundform. Seine zwei Seitenwandungen 18 erstrecken sich ausgehend von zwei sich parallel zur Längsachse X parallel erstreckenden äußeren Seitenkanten 20 so zu dem ersten Abschnitt hin, dass sie tangential an die Seitenwandung bzw. Umfangswandung des ersten Abschnittes 10 anschließen. Dabei greift die zylindrische Grundform des ersten Abschnittes 10 in die trapezförmige Grundform des Verbindungsabschnittes 16 ein, wie durch die runde gestrichelte Linie in Figuren 2 und 3 dargestellt ist. Die Seitenwandungen 18 sind gegenüber der trapezförmigen Grundform geringfügig nach außen gewölbt, um einen harmonischen Übergang zwischen dem zweiten Abschnitt 14 und dem ersten Abschnitt 10 zu schaffen. Auch der zweite Abschnitt 14, welcher eine quaderförmige Grundform aufweist, weist gerundete Kanten auf, um insgesamt eine glatte harmonische Außenform zu erzielen. Der erste Abschnitt 10, der zweite Abschnitt 14 sowie der Verbindungsabschnitt 16 begrenzen einen gemeinsamen Innenraum des Klemmenkastens, in welchem elektrische bzw. elektronische Bauelemente angeordnet werden können. Hinsichtlich der Umfangskontur des Antriebsmotors bzw. des Statorgehäuses ist zu verstehen, dass dies entweder die Umfangskontur des eigentlichen Gehäuses sein kann, oder aber auch die äußere Umfangskontur, welche durch den Außenumfang von Kühlrippen oder Kühlelementen, welche am Außenumfang des Statorgehäuses ausgebildet sind, definiert wird. In den Figuren 2 und 3 ist zu erkennen, dass der zweite Abschnitt 14 in tangentialer Richtung eine Breite b hat, welche größer ist als der Durchmesser d des ersten Abschnittes 10.

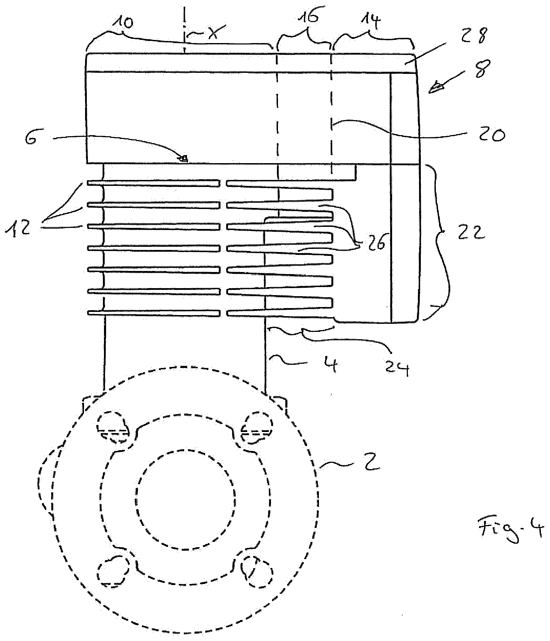

Bei der Ausführungsform gemäß Fig. 4 ist darüber hinaus ein dritter Abschnitt 22 des Klemmenkastens vorgesehen, welcher im Wesentlichen ebenfalls eine quaderförmige Grundform aufweist und sich in axialer Verlängerung des zweiten Abschnittes 14 parallel zu dem Statorgehäuse 4 erstreckt. Dabei ist der dritte Abschnitt 22 in radialer Richtung vom Außenumfang des Statorgehäuses 4 beabstandet, so dass zwischen dem Außenumfang des Statorgehäuses 4 und der Außenwandung des dritten Abschnittes 22 ein Freiraum 24 gebildet ist. In diesem sind Kühlrippen 26 angeordnet, welche sich von dem dritten Abschnitt 22 des Klemmenkastens ausgehend in den Freiraum 24 erstrecken. Der dritte Abschnitt 22 ist mit seinem Innenraum mit dem zweiten Abschnitt 14 verbunden, so dass ein durchgehender Innenraum geschaffen wird, in welchem elektronische Bauelemente angeordnet werden können. Darüber hinaus kann dieser Abschnitt auch einstückig mit dem zweiten Abschnitt 14 ausgebildet sein. Der erste Abschnitt 10, der zweite Abschnitt 14 und der Verbindungsabschnitt 16 sind darüber hinaus ebenfalls bevorzugt einstückig ausgebildet und durch einen gemeinsamen axialen Deckel 28 verschlossen.

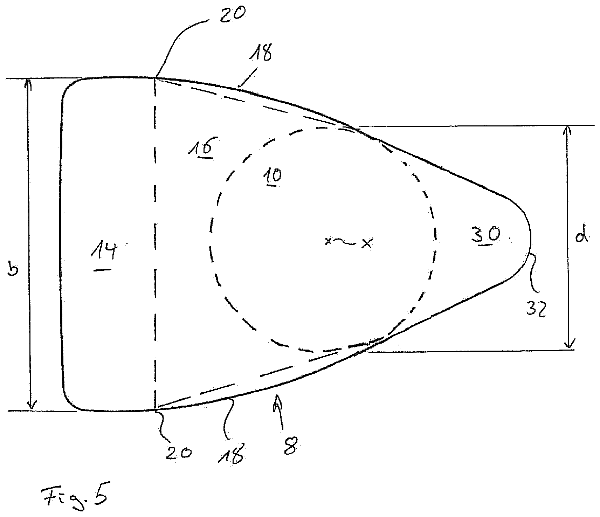

Figur 5 zeigt eine weitere Ausführungsform der Erfindung, welche eine Abwandlung der vorangehend beschriebenen Ausführungsform darstellt. Figur 5 zeigt eine Ansicht, welche der Darstellung in Figur 3 entspricht. Im Unterschied zu der Ausführungsform in Figur 3 weist bei der Ausführungsform gemäß Figur 5 der Klemmenkasten 8 einen vierten Abschnitt 30 auf. Dieser vierte Abschnitt 30 grenzt an den ersten Abschnitt 10 radialseitig an. Dabei ist der vierte Abschnitt 30 an der zu dem zweiten Abschnitt 14 diametral entgegengesetzten Radialseite des ersten Abschnittes 10 gelegen. Der vierte Abschnitt 30 wird bei dieser Ausgestaltung von einer radialen Verlängerung (bezogen auf die Längs- bzw. Drehachse X des Antriebsmotors) des Verbindungsabschnittes 16 gebildet. D. h. die Seitenwandungen 18 des Verbindungsabschnittes 16 sind über den ersten Abschnitt 10 hinaus verlängert und bilden so den vierten Abschnitt 30. Am radialen Ende des vierten Abschnittes 30 sind die Seitenwandungen 18 durch eine bogenförmige Verbindungswand 32 miteinander verbunden. Der Verbindungsabschnitt 16 und der sich daran anschließende vierte Abschnitt 30 bilden somit gemeinsam in der Draufsicht eine trapezförmige bzw. dreieckige Grundform, welche den ersten Abschnitt 10 mit kreisförmiger Grundform vollständig aufnimmt. D. h. der erste Abschnitt 10 tritt bei dieser Ausführungsform nach außen nicht in Erscheinung, sondern bildet vielmehr eine gedachte axiale Verlängerung des Statorgehäuses 4.

### Bezugszeichenliste

- 2: Pumpengehäuse
- 4: Statorgehäuse
- 6: Axialende
- 8: Klemmenkasten
- 10: erster Abschnitt
- 12: Kühlrippen
- 14: zweiter Abschnitt
- 16: Verbindungsabschnitt
- 18: Seitenwandung
- 20: Seitenkanten
- 22: dritter Abschnitt
- 24: Freiraum
- 26: Kühlrippen
- 28: Deckel
- 30: vierter Abschnitt
- 32: Verbindungswand

- d: Durchmesser
- b: Breite
- X: Längsachse

## Patentansprüche

1. Elektrischer Antriebsmotor (4), insbesondere für ein Pumpenaggragat, mit einem an dem elektrischen Antriebsmotor (4) angeordneten Klemmenkasten (8), wobei der Klemmenkasten (8) einen ersten Abschnitt (10) aufweist, welcher an einem Axialende (6) des Antriebsmotors (4) angeordnet ist, und einen zweiten Abschnitt (14) aufweist, welcher radial zu dem ersten Abschnitt (10) angeordnet ist, **dadurch gekennzeichnet, dass**
der zweite Abschnitt (14) radial beabstandet zu dem ersten Abschnitt (10) und außerhalb der Projektion des Antriebsmotors angeordnet ist, so dass der zweite Abschnitt (14) nicht direkt an den Außenumfang des Antriebsmotors oder an eine axiale Projektion des Außenumfangs des Antriebsmotors angrenzt, und dass der zweite Abschnitt (14) in tangentialer Richtung eine Breite (b) aufweist, welche größer als ein Durchmesser (d) des ersten Abschnittes in dieser Richtung ist, und
der zweite Abschnitt (14) mit dem ersten Abschnitt (10) über einen Verbindungsabschnitt (16) verbunden ist, welcher zwei einander abgewandte, sich von dem zweiten Abschnitt (14) zu dem ersten Abschnitt (10) erstreckende Seitenwandungen aufweist, welche sich zueinander derart gewinkelt erstrecken, dass sie sich zu dem ersten Abschnitt (10) hin einander annähern.

2. Elektrischer Antriebsmotor nach Anspruch 1, **dadurch gekennzeichnet, dass** der erste Abschnitt (10), der zweite Abschnitt (14) und der Verbindungsabschnitt (16) axialseitig zu dem Antriebsmotor (4) gelegen sind.

3. Elektrischer Antriebsmotor nach Anspruch 1 oder 2, **dadurch gekennzeichnet, dass** der erste Abschnitt (10), der zweite Abschnitt (14) und der Verbindungsabschnitt (16) einen gemeinsamen Innenraum des Klemmenkastens (8) definieren.

4. Elektrischer Antriebsmotor nach einem der vorangehenden Ansprüche, **dadurch gekennzeichnet, dass** der erste Abschnitt (10) dieselbe Umfangskontur wie das Axialende (6) des Antriebsmotors (4) oder eine zu der Umfangskontur des Axialendes (6) parallele größere Umfangskontur aufweist.

5. Elektrischer Antriebsmotor nach einem der vorangehenden Ansprüche, **dadurch gekennzeichnet, dass** der erste Abschnitt (10) eine zylindrische, insbesondere eine kreiszylindrische Grundform aufweist.

6. Elektrischer Antriebsmotor nach einem der vorangehenden Ansprüche, **dadurch gekennzeichnet, dass** der zweite Abschnitt (14) eine prismatische, insbesondere quaderförmige Grundform aufweist.

7. Elektrischer Antriebsmotor nach einem der vorangehenden Ansprüche, **dadurch gekennzeichnet, dass** sich die zwei einander abgewandte Seitenwandungen (18) jeweils ausgehend von einer Seitenkante (20) des zweiten Abschnittes (14) tangential angrenzend an den ersten Abschnitt (10) erstrecken.

8. Elektrischer Antriebsmotor nach einem der vorangehenden Ansprüche, **dadurch gekennzeichnet, dass** der Klemmenkasten (8) einen dritten Abschnitt (22) aufweist, welcher eine axiale Verlängerung des zweiten Abschnittes (14) ist und radial beabstandet zu dem Antriebsmotor (4) im Umfangsbereich des Antriebsmotors (4) gelegen ist.

9. Elektrischer Antriebsmotor nach Anspruch 8, **dadurch gekennzeichnet, dass** zwischen dem Außenumfang des Elektrischer Antriebsmotor (4) und dem dritten Abschnitt (22) des Klemmenkastens (8) ein Freiraum (24) vorhanden ist, welcher sich in zumindest einer vorgegebenen Einbaulage des Antriebsmotors in vertikaler Richtung erstreckt.

10. Elektrischer Antriebsmotor nach Anspruch 8 oder 9, **dadurch gekennzeichnet, dass** zwischen dem Außenumfang des Antriebsmotors (4) und dem dritten Abschnitt (22) des Klemmenkastens (8) ein Freiraum (24) vorhanden ist, in welchem an dem Antriebsmotor (4) und/oder an dem Klemmenkasten (8) angeordnete Kühlelemente (26) gelegen sind.

11. Elektrischer Antriebsmotor nach einem der vorangehenden Ansprüche, **dadurch gekennzeichnet, dass** der Klemmenkasten (8) einen vierten Abschnitt (30) aufweist, welcher radial an den ersten Abschnitt (10) an dessen dem zweiten Abschnitt (14) abgewandter Seite angrenzt und vorzugsweise eine radiale Verlängerung des Verbindungsabschnittes (16) bildet.

12. Elektrischer Antriebsmotor nach einem der vorangehenden Ansprüche, **dadurch gekennzeichnet, dass** zumindest zwei, vorzugsweise alle Abschnitte (10, 14, 16, 22) des Klemmenkastens (8) einstückig ausgebildet sind.

13. Elektrischer Antriebsmotor nach einem der vorangehenden Ansprüche, **dadurch gekennzeichnet, dass** der Klemmenkasten (8) aus Kunststoff gefertigt ist.

14. Elektrischer Antriebsmotor nach einem der vorangehenden Ansprüche, **dadurch gekennzeichnet, dass** die aneinander angrenzenden Wandungen der einzelnen Abschnitte (10, 14, 16, 22) des Klemmenkastens (8) fließend ineinander übergehen.

15. Elektrischer Antriebsmotor nach einem der vorangehenden Ansprüche, **dadurch gekennzeichnet, dass** der erste Abschnitt (10), der zweite Abschnitt (14) und der Verbindungsabschnitt (16) an ihrer dem Antriebsmotor (4) abgewandten axialen Stirnseite durch einen gemeinsamen Deckel (28) verschlossen sind.

16. Elektrischer Antriebsmotor nach Anspruch 15, **dadurch gekennzeichnet, dass** an dem Deckel (28) Bedien- und/oder Anzeigeelemente angeordnet sind.

17. Elektrischer Antriebsmotor nach einem der vorangehenden Ansprüche, **dadurch gekennzeichnet, dass** er Teil eines Pumpenaggregates und bevorzugt Teil eines Umwälzpumpenaggregats ist und insbesondere als nasslaufender Antriebsmotor ausgebildet ist.

18. Pumpenaggregat, **dadurch gekennzeichnet, dass** es einen elektrischen Antriebsmotor gemäß einem der vorangehenden Ansprüche aufweist.

## Claims

1. An electric drive motor (4), in particular for a pump assembly, with a terminal box (8) which is arranged on the electric drive motor (4), wherein the terminal box (8) comprises a first section (10) which is arranged at an axial end (6) of the drive motor (4), and a second section (14) which is arranged radially to the first section (10), **characterised in that**
the second section (14) is arranged radially distanced to the first section (10) and outside the projection of the drive motor, so that the second section (14) is not directly adjacent to the outer periphery of the drive motor or to an axial projection of the outer periphery of the drive motor and that the second section (14) has a width (b) in the tangential direction which is larger than a diameter (d) of the first section in this direction, and
the second section (14) is connected to the first section (10) via a connection section (16) which comprises two side walls which are away from one another, extend from the second section (14) to the first section (10) and extend angled to one another in a manner such that they approach one another towards the first section (10).

2. An electric drive motor according to claim 1, **characterised in that** the first section (10), the second section (14) and the connection section (16) are situated on the axial side to the drive motor (4).

3. An electric drive motor according to claim 1 or 2, **characterised in that** the first section (10), the second section (14) and the connection section (16) define a common interior of the terminal box (8).

4. An electric drive motor according to one of the preceding claims, **characterised in that** the first section (10) has the same peripheral contour as the axial end (6) of the drive motor (4) or a larger peripheral contour which is parallel to the peripheral contour of the axial end (6).

5. An electric drive motor according to one of the preceding claims, **characterised in that** the first section (10) has a cylindrical, in particular a circularly cylindrical basic shape.

6. An electric drive motor according to one of the preceding claims, **characterised in that** the second section (14) has a prismatic, in particular cuboid-shaped basic shape.

7. An electric drive motor according to one of the preceding claims, **characterised in that** the two side walls (18) which are away from one another, in each case departing from a side edge (20) of the second section (14), extend in a manner tangentially adjacent to the first section (10).

8. An electric drive motor according to one of the preceding claims, **characterised in that** the terminal box (8) comprises a third section (22) which is an axial extension of the second section (14) and is situated radially distanced to the drive motor (4) in the peripheral region of the drive motor (4).

9. An electric drive motor according to claim 8, **characterised in that** a free space (24) is present between the outer periphery of the electric drive motor (4) and the third section (22) of the terminal box (8), said free space in at least one predefined installed position of the drive motor extending in the vertical direction.

10. An electric drive motor according to claim 8 or 9, **characterised in that** a free space (24) is present between the outer periphery of the drive motor (4) and the third section (22) of the terminal box (8), in which free space cooling elements (26) which are arranged on the drive motor (4) and/or on the terminal box (8) are situated.

11. An electric drive motor according to one of the preceding claims, **characterised in that** the terminal box (8) comprises a fourth section (30) which is radially adjacent to the first section (10) at the side of this which is away from the second section (14), and preferably forms a radial extension of the connection section (16).

12. An electric drive motor according to one of the preceding claims, **characterised in that** at least two, preferably all sections (10, 14, 16, 22) of the terminal box (8) are designed as one piece.

13. An electric drive motor according to one of the preceding claims, **characterised in that** the terminal box (8) is manufactured of plastic.

14. An electric drive motor according to one of the preceding claims, **characterised in that** the walls of the individual sections (10, 14, 16, 22) of the terminal box (8), said walls being adjacent to one another, merge into one another in a fluent manner.

15. An electric drive motor according to one of the preceding claims, **characterised in that** the first section (10), the second section (14) and the connection section (16) at their axial face which is away from the drive motor (4) are closed by way of a common cover (28).

16. An electric drive motor according to claim 15, **characterised in that** operating elements and/or display elements are arranged on the cover (28).

17. An electric drive motor according to one of the preceding claims, **characterised in that** it is part of a pump assembly and preferably part of a circulation pump assembly and is designed in particular as a wet-running drive motor.

18. A pump assembly **characterised in that** it comprises an electrical drive motor according to one of the preceding claims.

## Revendications

1. Moteur d'entraînement électrique (4), en particulier pour groupe motopompe, comportant une boîte à bornes (8) agencée au niveau du moteur d'entraînement électrique (4), où la boîte à bornes (8) présente un premier tronçon (10), qui est agencé au niveau d'une extrémité axiale (6) du moteur d'entraînement (4), et un deuxième tronçon (14) qui est agencé radialement par rapport au premier tronçon (10), **caractérisé en ce que**
le deuxième tronçon (14) est agencé en étant espacé radialement du premier tronçon (10) et à l'extérieur de la projection du moteur d'entraînement de sorte que le deuxième tronçon (14) n'est pas directement adjacent à la périphérie extérieure du moteur d'entraînement ou à une projection axiale de la périphérie extérieure du moteur d'entraînement, et **en ce que** le deuxième tronçon (14) présente dans une direction tangentielle une largeur (b) qui est supérieure à un diamètre (d) du premier tronçon dans cette direction, et
le deuxième tronçon (14) est relié au premier tronçon (10) par l'intermédiaire d'un tronçon de liaison (16) qui présente deux parois latérales opposées l'une à l'autre et s'étendant du deuxième tronçon (14) vers le premier tronçon (10), qui s'étendent en formant l'une par rapport à l'autre un angle tel qu'elles se rapprochent l'une de l'autre en direction du premier tronçon (10).

2. Moteur d'entraînement électrique selon la revendication 1, **caractérisé en ce que** le premier tronçon (10), le deuxième tronçon (14) et le tronçon de liaison (16) sont disposés axialement par rapport au moteur d'entraînement (4).

3. Moteur d'entraînement électrique selon la revendication 1 ou 2, **caractérisé en ce que** le premier tronçon (10), le deuxième tronçon (14) et le tronçon de liaison (16) définissent un espace intérieur commun de la boîte à bornes (8).

4. Moteur d'entraînement électrique selon l'une quelconque des revendications précédentes, **caractérisé en ce que** le premier tronçon (10) présente le même contour circonférentiel que l'extrémité axiale (6) du moteur d'entraînement (4) ou un contour circonférentiel supérieur parallèle au contour circonférentiel de l'extrémité axiale (6).

5. Moteur d'entraînement électrique selon l'une quelconque des revendications précédentes, **caractérisé en ce que** le premier tronçon (10) présente une forme de base cylindrique, en particulier cylindrique circulaire.

6. Moteur d'entraînement électrique selon l'une quelconque des revendications précédentes, **caractérisé en ce que** le deuxième tronçon (14) présente une forme de base prismatique, en particulier parallélépipédique.

7. Moteur d'entraînement électrique selon l'une quelconque des revendications précédentes, **caractérisé en ce que** les deux parois latérales (18) opposées l'une à l'autre s'étendent respectivement à partir d'un bord latéral (20) du deuxième tronçon (14) en touchant le premier tronçon (10) de façon tangentielle.

8. Moteur d'entraînement électrique selon l'une quelconque des revendications précédentes, **caractérisé en ce que** la boîte à bornes (8) présente un troisième tronçon (22) qui est un prolongement axial du deuxième tronçon (14), et qui est disposé en étant espacé radialement par rapport au moteur d'entraînement (4) dans la région circonférentielle du moteur d'entraînement (4).

9. Moteur d'entraînement électrique selon la revendication 8, **caractérisé en ce qu'**un jeu (24) est présent entre la circonférence extérieure du moteur d'entraînement électrique (4) et le troisième tronçon (22) de la boîte à bornes (8), qui s'étend dans une direction verticale dans au moins une position de montage prédéterminée du moteur d'entraînement.

10. Moteur d'entraînement électrique selon la revendication 8 ou 9, **caractérisé en ce qu'**un jeu (24) est présent entre la circonférence extérieure du moteur d'entraînement (4) et le troisième tronçon (22) de la boîte à bornes (8), dans lequel sont disposés des éléments de refroidissement (26) agencés sur le moteur d'entraînement (4) et/ou sur la boîte à bornes (8).

11. Moteur d'entraînement électrique selon l'une quelconque des revendications précédentes, **caractérisé en ce que** la boîte à bornes (8) présente un quatrième tronçon (30) qui est radialement adjacent au premier tronçon (10) sur son côté opposé au deuxième tronçon (14), et forme de préférence un prolongement radial du tronçon de liaison (16).

12. Moteur d'entraînement électrique selon l'une quelconque des revendications précédentes, **caractérisé en ce qu'**au moins deux, de préférence tous les tronçons (10, 14, 16, 22) de la boîte à bornes (8) sont formés d'un seul tenant.

13. Moteur d'entraînement électrique selon l'une quelconque des revendications précédentes, **caractérisé en ce que** la boîte à bornes (8) est fabriquée en matière plastique.

14. Moteur d'entraînement électrique selon l'une quelconque des revendications précédentes, **caractérisé en ce que** les parois adjacentes les unes aux autres des tronçons individuels (10, 14, 16, 22) de la boîte à bornes (8) se fondent les unes dans les autres.

15. Moteur d'entraînement électrique selon l'une quelconque des revendications précédentes, **caractérisé en ce que** le premier tronçon (10), le deuxième tronçon (14) et le tronçon de liaison (16) sont fermés par un couvercle commun (28) sur leur côté avant axial opposé au moteur d'entraînement (4).

16. Moteur d'entraînement électrique selon la revendication 15, **caractérisé en ce que** des éléments de commande et/ou d'affichage sont agencés sur le couvercle (28).

17. Moteur d'entraînement électrique selon l'une des revendications précédentes, **caractérisé en ce qu'**il forme une partie d'un groupe motopompe, et de préférence une partie d'une unité de pompe de circulation, et en particulier est conçu comme un moteur d'entraînement à fonctionnement par voie humide.

18. Groupe motopompe, **caractérisé en ce qu'**il comprend un moteur d'entraînement électrique selon l'une des revendications précédentes.
